# EUROPEAN PATENT SPECIFICATION

(11) **EP 1 770 871 B1**
(45) Date of publication and mention of the grant of the patent: **23.08.2017**
(21) Application number: 05773887.4
(22) Date of filing: 07.07.2005
(51) Int. Cl.: H04B 3/56

(54) **DEVICE FOR THE CAPACITIVE COUPLING OF A DATA-TRANSMISSION DEVICE TO A PHASE OF AN ELECTRICAL POWER LINE**
VORRICHTUNG ZUR KAPAZITIVEN KOPPLUNG EINER DATENÜBERTRAGUNGSVORRICHTUNG MIT EINER STROMVERSORGUNGSLINIE
DISPOSITIF DESTINE AU COUPLAGE CAPACITIF D'UN EQUIPEMENT DE TRANSMISSION DE DONNEES A UNE PHASE D'UNE LIGNE ELECTRIQUE

(30) Priority: 22.07.2004 ES 200401794
(43) Date of publication of application: 04.04.2007
(73) Proprietor: ZIV COMMUNICATIONS S.A., 08840 Viladecans Barcelona (ES)
(72) Inventor: MORENO RODRÍGUEZ, José Antonio, E-08020 Barcelona (ES); PONS MORENO, Salvador, E-08940 Cornellà (ES)
(74) Representative: Curell Suñol S.L.P.
(86) International application number: PCT/ES2005/000389
(87) International publication number: WO 2006/035078

(56) References cited:
- EP-A1- 1 079 538
- EP-A1- 1 309 098
- EP-A1- 1 309 098
- EP-A2- 1 187 271
- WO-A1-00/49726
- WO-A1-03/107560
- GB-A- 635 014
- JP-A- 8 264 330
- US-A- 1 774 969
- US-A1- 2001 038 329
- US-A1- 2001 038 329
- US-A1- 2004 032 307

## Description

### Field of the invention

The invention relates to a capacitive coupling device of data transmission equipment to a phase of an electrical power line so as to transmit, over said power line, an electrical data signal in a range of frequencies between 3 kHz and 100 MHz, said coupling device being of the type comprising at least the following components:
- line connection means, equipment connection means and ground connection means, whereby said coupling device is suitable for connecting respectively to said phase of a power line, to said data transmission equipment and to the ground;
- a coupling capacitor connected at its first end to said line connection means and at its second end, directly or through a protection device, to said ground connection means; and
protection, tuning and adaptation means, which make up an interface between said second end of said coupling capacitor and said equipment connection means.

The capacitive coupling device to which the invention refers is particularly applicable in the data transmission over power lines technology, known by the initials PLC, meaning "powerline communication". This technology allows a high speed data transmission network to be set up using existing low and medium voltage electrical networks as transmission lines, thus obviating the need to lay down specific wiring, such as for example a fiber optics run. According to this principle, an existing power line, for example a medium voltage line with 24 kV between phases, can simultaneously transmit electrical energy, via a signal at the usual frequency of 50 Hz (or 60 Hz), and a data flow at a higher frequency, between 3 kHz and 100 MHz.

In order to transmit data between two particular points of an electrical power line, connection nodes between one phase in said line and a local data transmission network or end user must be established at said points. In each of said connection nodes, data transmission equipment, responsible for managing the data flow to be transmitted, is connected to said phase via a coupling device the main purpose of which is to adapt the impedances between the power line and the data transmission equipment, while also conditioning the band width of the data signal and providing the necessary electrical protection with respect to the line voltage. This invention relates to one of said coupling devices, and in particular to one of the capacitive type, in other words in which the impedances are adapted essentially by a coupling capacitor.

### State of the art

Some capacitive coupling devices are known that are used by electrical companies to transmit their own data between different points of a high voltage electrical network, normally in order to control the state of the network. Said known devices are made up of various components that are separated physically, have to be fitted separately and then connected together through wiring. It is not easy to fit these known devices, because the fitter must pay particular attention to the location and safety conditions corresponding to each component.

Recently some coupling devices have been developed that are specifically adapted to transmitting data over a medium voltage power line and they are intended particularly for setting up a PLC transmission system for high speed Internet. These known devices are made up of one single block. Their compactness is certainly an advantage over the high voltage devices mentioned above, since this guarantees that the components are connected correctly and makes the design suitable for the external conditions said block has to withstand. However, in practice, fitting this type of device is not very practical because of its heavy weight (typically over 5 kg). It must be borne in mind that these devices are often fitted in the actual power line pylons, in difficult fitting conditions. Another drawback of this type of device is that, since its components cannot be opened, they cannot be replaced or adjusted to adapt them better to the real conditions of the electrical network. EP1309098 A1 discloses a capacitive coupling device according to the preamble of claim 1.

### Disclosure of the invention

The aim of the invention is to overcome these drawbacks. This aim is obtained bv a capacitive coupling according to claim 1. The coupling device according to the invention has the advantage that it is compact, once assembled, and considerably easier to fit than the prior art examples. In fact, the fitter will be able to first position the first block, attaching it to a structure thanks to said attachment means, set up the ground connections, assemble the second block to the first one forming a compact unit, with the guarantee that all the device elements are connected correctly owing to the simple fact that the two blocks are assembled, and finally set up the connection to a phase of the power line. Also, if the adaptation to the real network conditions is not satisfactory, or if, for example, it is desired to modify the bandwidth for data transmission, it is possible to replace only the first block of the device, maintaining the second block. In fact, the constitution of the coupling device according to the invention is such that the first block contains all the components that are likely to require adjustment, while the second block only contains the coupling capacitor, the characteristics of which are constant for a particular nominal voltage of the power line to which it must be coupled.

Preferably, said first and second blocks are each made in a molded resin encapsulation, where said encapsulations only leave accessible those parts intended for connection or attachment, that is the ground connection means, the equipment connection means, the structure attachment means, the line connection means, the mutual electrical connection means and the mutual mechanical coupling means. The resins constituting the encapsulations are preferably epoxy resins with hardener fillers, which have the advantage that they can be suitably molded and have a high mechanical strength and a high dielectric rigidity.

Advantageously, said first block comprises a printed circuit board that houses at least one part of said protection, tuning and adaptation means, with the resin constituting said encapsulation of the first block being a resin that is suitable for cold molding and said resin being applied in direct contact with said printed circuit board. By using a cold molding resin it is possible to put the protection, tuning and adaptation means on a printed circuit board, thus optimizing manufacturing, without having to provide special protection for said board during the molding process.

Advantageously, the encapsulation of said second block has an external shape in the form of a cylindrical or conical housing made up of a series of concentric, truncated bells the purpose of which is to extend the creepage distance and thus increase the flashover voltage. The thus formed encapsulation therefore has the double function of structural container for the second block and insulation protection against surges in the power line. Preferably, the encapsulation of the first block has a cylindrical or conical external shape with one lower seating surface that houses said structure attachment means, so that the compact unit formed by the two connected blocks also constitutes suitable insulation protection against line surges.

Preferably, said mechanical coupling means between the first and second blocks are made from electrically conductive material and also form said mutual electrical connection means. More preferably, said mechanical coupling means are made up, on the one hand, of a threaded shank made from electrically conductive material integral with the first block and electrically connected to the protection, tuning and adaptation means and, on the other hand, of a threaded hole made in a bushing made from electrically conductive material that is housed in the second block and connected to the second end of the coupling capacitor, said threaded shank and said threaded hole being complementary. Advantageously, the first block has a top surface in the center of which said threaded shank is provided, and the second block has a bottom surface, complementary to said top surface, in the center of which said threaded orifice is arranged. Thanks to this configuration, the two blocks are coupled and connected simply by threading the second block in to the first one, by threading said shank into said hole, with the thus connected two blocks forming a compact unit.

Advantageously, said structure attachment means consist of a mechanical attachment device made from electrically conductive material and also constitute said ground connection means, and preferably said mechanical attachment device consists of a plurality of bolts the shanks of which project through said lower seating surface and the heads of which are applied to said printed circuit board in contact with the parts of said protection, tuning and adaptation means that must have a ground connection. This way a simple and effective solution is obtained to simultaneously guarantee the printed circuit board support, the ground connection and the device attachment.

Preferably, said equipment connection means consist of a single connector housed in a recess in said first block. This single connector is normally a BNC type connector and it is protected thanks to its location in the recess.

Advantageously, said line connection means consist of a threaded hole in a bushing made from electrically conductive material and which is housed in said second block and connected to the first end of said coupling capacitor. The threaded hole is intended to receive a threaded stud in which the connection cable is attached to a phase of the power line. This solution reduces the number of parts of the device and avoids the second block, which is heavier, from having projecting parts that make transport and storage awkward and which can prove dangerous when the device is being fitted.

Preferably, the capacity of said coupling capacitor is greater or equivalent to 0.1 nF and lower or equivalent to 5 nF, with the coupling device according to the invention being suitable for being connected to a phase of an electrical power line whose voltage between phase and neutral is greater or equivalent to 5 kV, in other words that said coupling device is suitable for implementing a PLC communication system over a medium voltage power line run.

### Brief description of the drawings

Other advantages and characteristics of the invention are apparent from the following description, in which, with non-limiting character, is explained in a preferred embodiment of the invention, with reference to the attached drawings.

The figures show:
Fig. 1, a front top perspective view, exploded, of a coupling device according to the invention, in which the two blocks making up the device are separate with one facing the other to be coupled;
Fig. 2, a similar view to Fig. 1, according to a front bottom view;
Fig. 3, a sectional view of the device in the preceding figures;
Fig. 4, a similar view to Fig. 3, representing an electrical diagram of the components of the first block.

### Detailed description of an embodiment of the invention

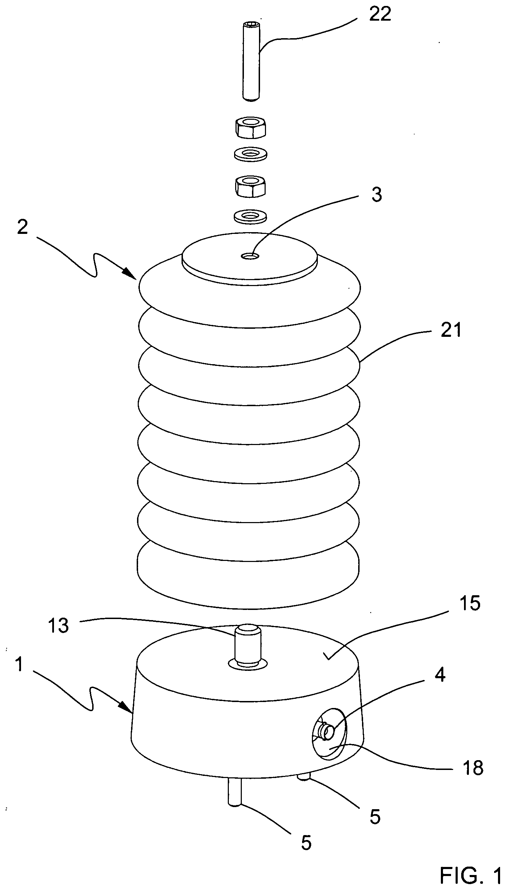

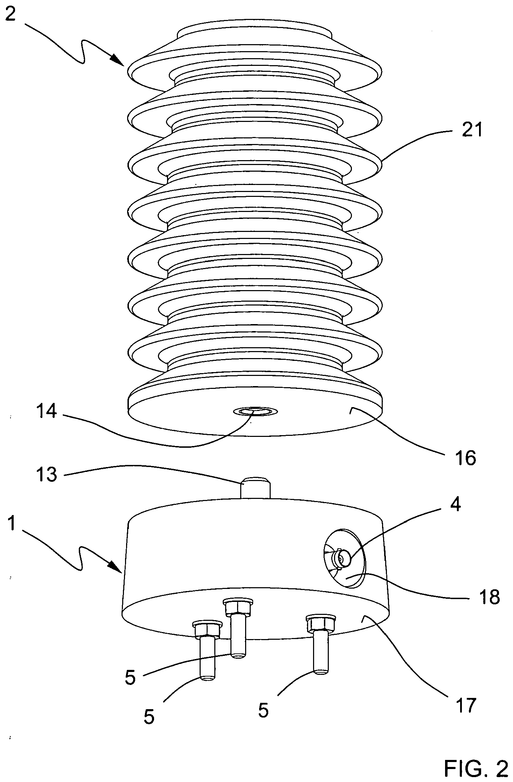

The embodiment shown in Figs. 1 through 4 corresponds to a coupling device intended to couple a data transmission equipment to one of the phases of a three-phase electrical power line. In this particular example, the nominal voltage between phases in the power line is 24 kV and the range of frequencies (bandwidth) of the data transmission signal is between 2 MHz and 38 MHz.

The coupling device is made up of two blocks 1, 2 that can be mechanically coupled together to form a compact unit.

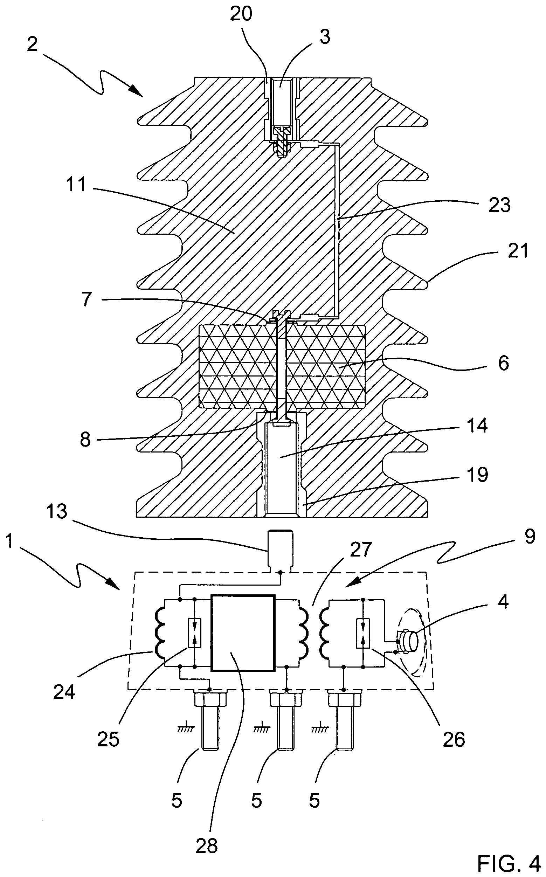

The first block 1 has a substantially cylindrical shape and comprises protection, tuning and adaptation means 9, connection means 4 to said data transmission equipment and structure attachment means 5, with the latter also being ground connection means. Protection, tuning and adaptation means 9 are made up of a drain coil 24, a gas discharger 25 and a tuning circuit 28 arranged on the line connection side and coupled by means of an insulation transformer 27 on the data transmission equipment side, where a gas discharger 26 is also arranged, all according to the electrical diagram shown in Fig. 4. Said first block 1 is provided with a threaded, metallic shank 13 that projects in the central position from the top surface 15 of said first block 1 and which, together with a threaded hole 14 in a metallic bushing 19 housed in the second block 2, forms, as will be seen later, electrical connection and mechanical coupling means between the two blocks 1 and 2. The connection means to a data transmission equipment consist of a single BNC type connector 4 housed in a recess 18 arranged on the side wall of said first block 1. The tuning circuit 28 is arranged on a printed circuit board 12 that is attached to the heads of three metallic bolts 5. The shanks of these bolts 5 project from the lower seating surface 17 of the first block 1 and its heads are in contact with the parts of said protection, tuning and adaptation means 9 that must have a ground connection, according to the electrical diagram in Fig. 4, so that these bolts 5 form simultaneously structure attachment means and ground connection means. On the other hand, the inner end of shank 13 is threaded in a housing in the printed circuit board 12 where it is connected to protection, tuning and adaptation means 9 according to the electrical diagram in Fig. 4.

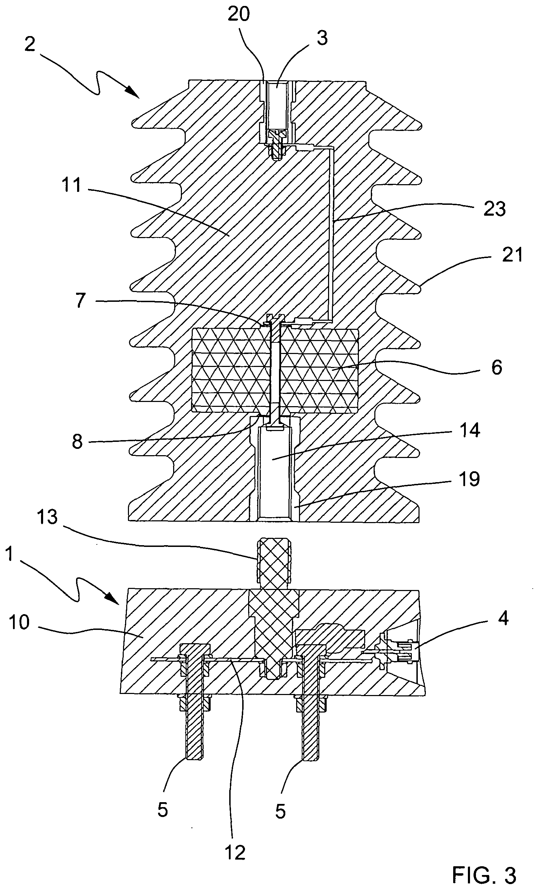

This first block 1 is formed in an encapsulation 10 of epoxy resin with hardener fillers and coloring agent, with this resin being of the type that is cold molded. Therefore, the various components of the first block 1 are connected according to the arrangement shown in Fig. 3 and they are placed in a cylindrical shaped mould, where the space of recess 18 is preserved. A cold mixture of said epoxy resin with hardener fillers is cast in said mould, said mixture falling directly onto the printed circuit board 12 that does not have any protection. After the setting process, the next step is stripping the mould and, after a series of finishing operations which basically consist in removing excess material, said first block 1 is obtained in which only the shanks of bolts 5, the BNC type single connector 4 and the threaded shank 13 are accessible.

The second block 2 comprises a coupling capacitor 6, which in this particular example has a capacity of 2 nF. The first end 7 of said capacitor 6 is connected, by a rigid cable 23, to a metallic bushing 20 provided with a threaded hole 3 in the top surface of said second block 2 and which constitutes connection means to a phase of a power line. This connection can be made by threading in hole 3 a stud 22 with the corresponding locknuts for attaching to a line connection cable. The second end 8 of capacitor 6 is connected via screws to a metallic bushing 19 provided with a threaded hole 14 in the central position of lower surface 16 of said second block 2. The threaded hole 14 and the threaded shank 13 are complementary. The shapes of the top 15 and bottom 16 surfaces of blocks 1 and 2 are also complementary, which surfaces in this case are circular and flat with an equal diameter. The second block 2 is thus coupled to the first block 1 by threading shank 13 into threaded hole 14 until the two surfaces 15 and 16 form an abutment one against the other, forming overall a compact unit.

This second block 2 is formed in an encapsulation 11 of epoxy resin with hardener, fillers, silica and coloring agent, with this resin being of the hot injection type. Therefore, the capacitor 6 is placed in a hot injection mould connected to bushings 19 and 20 according to the arrangement shown in Fig. 3 and the resin with fillers is hot injected. After the setting process, the part is stripped in hot from the mould, then it is cooled and it is electrically checked. Thus the second block 2 is obtained in which only threaded holes 3 and 14 are accessible. The geometry of the injection mould confers the shape of a cylindrical housing to the second block 2, made up of a series of concentric, truncated bell elements 21 whose function is to increase the creepage distance, so that this encapsulation 11 also forms suitable insulation against line surges.

## Claims

1. Capacitive coupling device of data transmission equipment to a phase of an electrical power line in order to transmit, over said power line, an electrical data signal in a range of frequencies between 3 kHz and 100 MHz, with said coupling device being of the type that comprises at least the following components:
- line connection means (3), equipment connection means (4) and ground connection means (5), whereby said coupling device is suitable for connecting respectively to said phase of a power line, to said data transmission equipment and to the ground;
- a coupling capacitor (6) connected at its first end (7) to said line connection means (3) and at its second end (8), directly or via a protection device, to said ground connection means (5); and
- protection, tuning and adaptation means (9) which form an interface between said second end (8) of said coupling capacitor (6) and said equipment connection means (4),
said coupling device being made up of two blocks (1, 2) that can be coupled together mechanically to form a compact unit:
- a first block (1) that comprises said protection, tuning and adaptation means (9), and said equipment connection means (4),
- a second block (2) that comprises said coupling capacitor (6) and said line connection means (3),
said first (1) and second (2) blocks being provided with mutual electrical connection means (13, 14) and mutual mechanical coupling means (13, 14),
**characterized in that** said ground connection means (5) being also structure attachment means (5) are provided on said first block (1) which comprises said protection, tuning and adaptation means (9).

2. Coupling device according to claim 1, **characterized in that** said first (1) and second (2) blocks are each made up of a molded resin encapsulation (10, 11), where said encapsulations (10, 11) only leave accessible said ground connection (5), said equipment connection means (4), said structure attachment means (5) means, said line connection means (3), said mutual electrical connection means (13, 14) and said mutual mechanical coupling means (13, 14).

3. Coupling device according to claim 2, **characterized in that** said first block (1) comprises a printed circuit board (12) that houses at least one part of said protection, tuning and adaptation means (9), with the resin forming said encapsulation (10) of the first block (1) being one that is suitable for cold molding and said resin being applied in direct contact with said printed circuit board (12).

4. Coupling device according to claims 2 or 3, **characterized in that** the encapsulation (11) of said second block (2) has an external shape in the form of a cylindrical or conical housing made up of a series of concentric, truncated bell elements (21).

5. Coupling device according to claim 4, **characterized in that** said encapsulation (10) of said first block (1) has a cylindrical or conical external shape with a lower seating surface (17) that contains said structure attachment means (5).

6. Coupling device according to any of the claims 1 through 5, **characterized in that** said mechanical coupling means (13, 14) between said first (1) and second (2) blocks are made from an electrically conductive material and also form said mutual electrical connection means (13, 14).

7. Coupling device according to claim 6, **characterized in that** said mechanical coupling means between said first (1) and second (2) blocks, which also form said mutual electrical connection means, are made up, on the one hand, of a threaded shank (13) made from electrically conductive material integral with said first block (1) and connected electrically to said protection, tuning and adaptation means (9) and, on the other hand, of a threaded hole (14) in a bushing (19) made from electrically conductive material and that is in said second block (2) and connected to the second end (8) of said coupling capacitor (6), said threaded shank (13) and said threaded hole (14) being complementary.

8. Device according to claim 7, **characterized in that** said first block (1) has a top surface (15) in the center of which said threaded shank (13) is arranged, and said second block (2) has a bottom surface (16), complementary to said top surface (15), in the center of which said threaded hole is arranged (14).

9. Coupling device according to any of the claims 1 through 8, **characterized in that** said structure attachment means (5) consist of a mechanical attachment device made from electrically conductive material and which also forms said ground connection means (5).

10. Device according to claims 3, 5 and 9, **characterized in that** said mechanical attachment means consist of a plurality of bolts (5) the shanks of which project from said lower seating surface (17) and the heads of which are applied on to said printed circuit board (12) in contact with the parts of said protection, tuning and adaptation means (9) that must have a ground connection.

11. Coupling device according to any of the claims 1 through 10, **characterized in that** said equipment connection means (4) consist of a single connector housed in a recess (18) in said first block (1).

12. Device according to any of the claims 1 through 11, **characterized in that** said line connection means (3) consist of a threaded hole in a bushing (20) made from electrically conductive material that is housed in said second block (2) and connected to the first end (7) of said coupling capacitor (6).

13. Coupling device according to any of the claims 1 through 12, **characterized in that** said coupling capacitor (6) has a capacity greater or equal to 0.1 nF and lower or equal to 5 nF, with said coupling device being suitable for connecting to a phase of an electrical power line whose voltage between phase and neutral is greater or equivalent to 5 kV.

## Patentansprüche

1. Vorrichtung zur kapazitiven Kopplung einer Datenübertragungsvorrichtung mit einem Außenleiter einer Stromversorgungsleitung, um, über diese Stromleitung, ein elektrisches Datensignal in einem Frequenzbereich zwischen 3 kHz und 100 MHz zu übertragen, wobei die Kopplungsvorrichtung vom Typ ist, der zumindest die folgenden Komponenten aufweist:
- Leitungsverbindungsmittel (3), Vorrichtungsverbindungsmittel (4) und Masseverbindungsmittel (5), wodurch die Kopplungsvorrichtung für eine jeweilige Verbindung mit dem Außenleiter einer Stromleitung, mit der Datenübertragungsvorrichtung und mit Masse geeignet ist;
- einen Kopplungskondensator (6), der an seinem ersten Ende (7) mit den Leitungsverbindungmitteln (3) und an seinem zweiten Ende (8), direkt oder über eine Schutzvorrichtung, mit den Masseverbindungsmitteln (5) verbunden ist; und
- Schutz-, Abstimmungs- und Anpassungsmittel (9), die eine Schnittstelle zwischen dem zweiten Ende (8) des Kopplungskondensators (6) und den Vorrichtungsverbindungsmitteln (4) bilden,
wobei die Kopplungsvorrichtung aus zwei Blöcken (1, 2) besteht, die sich mechanisch zu einer kompakten Einheit aneinanderkoppeln lassen:
- ein erster Block (1), der die Schutz-, Abstimmungs- und Anpassungsmittel (9) und die Vorrichtungsverbindungsmittel (4) aufweist,
- ein zweiter Block (2), der den Kopplungskondensator (6) und die Leitungsverbindungsmittel (3) aufweist,
wobei der erste (1) und der zweite (2) Block gegenseitige elektrische Verbindungsmittel (13, 14) und gegenseitige mechanische Kopplungsmittel (13, 14) aufweisen,
**dadurch gekennzeichnet, dass** die Masseverbindungsmittel (5), die auch Strukturanbringungsmittel (5) sind, auf dem ersten Block (1) vorgesehen sind, der die Schutz-, Abstimmungs- und Anpassungsmittel (9) aufweist.

2. Kopplungsvorrichtung nach Anspruch 1, **dadurch gekennzeichnet, dass** der erste (1) und der zweite (2) Block jeweils aus einer Einkapselung (10, 11) aus geformtem Kunstharz besteht, wobei die Einkapselungen (10, 11) nur zu den Masseverbindungsmitteln (5), den Vorrichtungsverbindungsmitteln (4), den Strukturanbringungsmitteln (5), den Leitungsverbindungsmitteln (3), den gegenseitigen elektrischen Verbindungsmitteln (13, 14) und den gegenseitigen mechanischen Kopplungsmitteln (13, 14) Zugang gewähren.

3. Kopplungsvorrichtung nach Anspruch 2, **dadurch gekennzeichnet, dass** der erste Block (1) eine Leiterplatte (12) aufweist, in der wenigstens ein Teil der Schutz-, Abstimmungs- und Anpassungsmittel (9) aufgenommen ist, wobei das die Einkapselung (10) des ersten Blocks (1) bildende Kunstharz solcher Natur ist, dass es sich zum Kaltformen eignet und wobei dieses Kunstharz in direktem Kontakt mit der Leiterplatte (12) aufgebracht ist.

4. Kopplungsvorrichtung nach Anspruch 2 oder 3, **dadurch gekennzeichnet, dass** die Einkapselung (11) des zweiten Blocks (2) eine äußere Gestalt aufweist, in Form eines zylindrischen oder konischen Gehäuses, das aus einer Reihe von konzentrischen, Glockenstumpfelementen (21) besteht.

5. Kopplungsvorrichtung nach Anspruch 4, **dadurch gekennzeichnet, dass** die Einkapselung (10) des ersten Blocks (1) eine zylindrische oder konische äußere Gestalt aufweist, mit einer unteren Aufsitzfläche (17), die die Strukturanbringungsmittel (5) beinhalten.

6. Kopplungsvorrichtung nach einem beliebigen der Ansprüche 1 bis 5, **dadurch gekennzeichnet, dass** die mechanischen Kopplungsmittel (13, 14) zwischen dem ersten (1) und dem zweiten (2) Block aus einem elektrisch leitenden Material hergestellt sind und auch die gegenseitigen elektrischen Verbindungsmittel (13, 14) bilden.

7. Kopplungsvorrichtung nach Anspruch 6, **dadurch gekennzeichnet, dass** die mechanischen Kopplungsmittel, die zwischen dem ersten (1) und dem zweiten (2) Block vorgesehen sind und auch die gegenseitigen elektrischen Verbindungsmittel bilden, einerseits aus einem Gewindeschaft (13) bestehen, der einstückig mit dem ersten Block (1) aus einem elektrisch leitenden Material hergestellt und elektrisch mit den Schutz-, Abstimmungs- und Anpassungsmitteln (9) verbunden ist, und andererseits aus einer Gewindebohrung (14), die in einer Buchse (19) vorgesehen ist, die aus einem elektrisch leitenden Material hergestellt und in dem zweiten Block (2) angeordnet und mit dem zweiten Ende (8) des Kopplungskondensators (6) verbunden ist, wobei der Gewindeschaft (13) und die Gewindebohrung (14) komplementär zueinander sind.

8. Vorrichtung nach Anspruch 7, **dadurch gekennzeichnet, dass** der erste Block (1) eine Deckfläche (15) aufweist, in deren Mitte der Gewindeschaft (13) angeordnet ist, und der zweite Block (2) eine Bodenfläche (16) aufweist, die komplementär zu dieser Deckfläche (15) ist und in deren Mitte die Gewindebohrung (14) angeordnet ist.

9. Kopplungsvorrichtung nach einem beliebigen der Ansprüche 1 bis 8, **dadurch gekennzeichnet, dass** die Strukturanbringungsmittel (5) aus einer mechanischen Anbringungsvorrichtung bestehen, die aus einem elektrisch leitenden Material hergestellt ist und die auch die Masseverbindungsmittel (5) bilden.

10. Vorrichtung nach den Ansprüchen 3, 5 und 9, **dadurch gekennzeichnet, dass** die mechanische Anbringungsmittel aus einer Mehrzahl von Bolzen (5) bestehen, deren Schäfte über die unteren Aufsitzfläche (17) hervorstehen und deren Köpfe an der Leiterplatte (12) angebracht sind, in Kontakt mit den Teilen der Schutz-, Abstimmungs- und Anpassungsmittel (9), die eine Masseverbindung erfordern.

11. Kopplungsvorrichtung nach einem beliebigen der Ansprüche 1 bis 10, **dadurch gekennzeichnet, dass** die Vorrichtungsverbindungsmittel (4) aus einem einzelnen Verbinder bestehen, der in einer Aussparung (18) in dem ersten Block (1) aufgenommen ist.

12. Vorrichtung nach einem beliebigen der Ansprüche 1 bis 11, **dadurch gekennzeichnet, dass** die Leitungsverbindungsmittel (3) aus einer Gewindebohrung bestehen, die in einer Buchse (20) vorgesehen ist, die aus einem elektrisch leitenden Material hergestellt und in dem zweiten Block (2) angebracht und mit dem ersten Ende (7) des Kopplungskondensators (6) verbunden ist.

13. Kopplungsvorrichtung nach einem beliebigen der Ansprüche 1 bis 12, **dadurch gekennzeichnet, dass** der Kopplungskondensator (6) eine Kapazität aufweist, die größer oder gleich 0,1 nF und geringer oder gleich 5 nF ist, wobei die Kopplungsvorrichtung zum Verbinden mit einem Außenleiter einer Stromversorgungsleitung geeignet ist, deren Spannung zwischen dem Außenleiter und dem Neutralleiter größer oder gleich 5 kV ist.

## Revendications

1. Dispositif de couplage capacitif d'un équipement de transmission de données à une phase d'une ligne électrique afin de transmettre, sur ladite ligne électrique, un signal de données électrique sur une plage de fréquences allant de 3 kHz à 100 Mhz, dans lequel ledit dispositif de couplage comprend au moins les éléments suivants :
- un moyen de connexion de ligne (3), un moyen de connexion d'équipement (4), un moyen de connexion à la terre (5), au moyen desquels ledit dispositif de couplage est adapté pour être connecté à ladite phase de ligne électrique, audit équipement de transmission de données et à la terre respectivement ;
- un condensateur de couplage (6) connecté à sa première extrémité (7) audit moyen de connexion de ligne (3) et à sa deuxième extrémité (8), directement ou via un dispositif de protection, audit moyen de connexion à la terre (5) ; et
- un moyen de protection, de syntonisation et d'adaptation (9) qui forme un interface entre ladite deuxième extrémité (8) dudit condensateur de couplage (6) et ledit moyen de connexion d'équipement (4),
ledit dispositif de couplage étant composé de deux blocs (1, 2) qui peuvent être couplés ensemble mécaniquement pour former une unité compacte :
- un premier bloc (1) qui comprend ledit moyen de protection, de syntonisation et d'adaptation (9) et ledit moyen de connexion d'équipement (4),
- un deuxième bloc (2) qui comprend ledit condensateur de couplage (6) et ledit moyen de connexion de ligne (3),
lesdits premier (1) et deuxième (2) blocs étant équipés de moyens de connexion électrique mutuels (13, 14) et de moyens de couplage mécanique mutuels (13, 14),
**caractérisé en ce que** ledit moyen de connexion à la terre (5), qui est aussi un moyen de fixation à une structure (5), est prévu dans ledit premier bloc (1) qui comprend ledit moyen de protection, de syntonisation et d'adaptation (9).

2. Dispositif de couplage selon la revendication 1, **caractérisé en ce que** lesdits premier (1) et deuxième (2) blocs sont chacun composés d'une encapsulation de résine moulée (10, 11), où lesdites encapsulations (10, 11) rendent accessibles seulement ledit moyen de connexion à la terre (5), ledit moyen de connexion d'équipement (4), ledit moyen de fixation à une structure (5), ledit moyen de connexion de ligne (3), lesdits moyens de connexion électrique mutuels (13, 14) et lesdits moyens de couplage mécanique mutuels (13, 14).

3. Dispositif de couplage selon la revendication 2, **caractérisé en ce que** ledit premier bloc (1) comprend un circuit imprimé (12) qui loge au moins une partie dudit moyen de protection, de syntonisation et d'adaptation (9), dans lequel la résine formant ladite encapsulation (10) du premier bloc (1) est une résine adaptée pour le moulage à froid et ladite résine est appliquée en contact direct avec ledit circuit imprimé (12).

4. Dispositif de couplage selon l'une des revendications 2 ou 3, **caractérisé en ce que** l'encapsulation (11) dudit deuxième bloc (2) a une forme extérieure en forme d'un logement cylindrique ou conique composé d'une série d'éléments de cloches tronquées concentriques (21).

5. Dispositif de couplage selon la revendication 4, **caractérisé en ce que** ladite encapsulation (10) du premier bloc (1) a une forme extérieure cylindrique ou conique avec une surface d'assise inférieure (17) qui contient ledit moyen de fixation à une structure (5).

6. Dispositif de couplage selon l'une des revendications 1 à 5, **caractérisé en ce que** lesdits moyens de couplage mécanique mutuels (13, 14) entre ledit premier (1) et ledit deuxième (2) blocs sont faits d'un matériau électriquement conducteur et forment aussi lesdits moyens de connexion électrique mutuels (13, 14).

7. Dispositif de couplage selon la revendication 6, **caractérisé en ce que** lesdits moyens de couplage mécanique entre ledit premier (1) et ledit deuxième (2) bloc, qui forment aussi lesdits moyens de connexion électrique mutuels, sont composés, d'une part d'une tige filetée (13) faite d'un matériau électriquement conducteur intégré audit premier bloc (1) et connectée électriquement audit moyen de protection, de syntonisation et d'adaptation (9), et, d'autre part, d'un trou fileté (14) dans une bague (19) faite d'un matériau électriquement conducteur et qui est dans ledit deuxième bloc (2) et connecté à la deuxième extrémité (8) dudit condensateur de couplage (6), ladite tige filetée (13) et ledit trou fileté (14) étant complémentaires.

8. Dispositif selon la revendication 7, **caractérisé en ce que** ledit premier bloc (1) a une surface supérieure (15) au centre de laquelle ladite tige filetée (13) est disposée, et ledit deuxième bloc (2) a une surface inférieure (16), complémentaire à ladite surface supérieure (15), au centre de laquelle ledit trou fileté est disposé (14).

9. Dispositif de couplage selon l'une des revendications 1 à 8, **caractérisé en ce que** ledit moyen de fixation à une structure (5) comprend un dispositif de fixation mécanique fait d'un matériau électriquement conducteur et qui forme aussi ledit moyen de connexion à la terre (5).

10. Dispositif selon les revendications 3, 5 et 9, **caractérisé en ce que** ledit moyen de fixation mécanique comprend une pluralité de boulons (5) dont les tiges font saillie de ladite surface d'assise inférieure (17) et dont les têtes sont appliquées sur ledit circuit imprimé (12) en contact avec les parties dudit moyen de protection, de syntonisation et d'adaptation (9) qui doit avoir une connexion avec la terre.

11. Dispositif de couplage selon l'une des revendications 1 à 10, **caractérisé en ce que** ledit moyen de connexion d'équipement (4) comprend un seul connecteur logé dans un renfoncement (18) dans ledit premier bloc (1).

12. Dispositif selon l'une quelconque des revendications 1 à 11, **caractérisé en ce que** ledit moyen de connexion de ligne (3) comprend un trou fileté dans une bague (20) faite d'un matériau électriquement conducteur qui est logée dans ledit deuxième bloc (2) et connectée à la première extrémité (7) dudit condensateur de couplage (6).

13. Dispositif de couplage selon l'une quelconque des revendications 1 à 12, **caractérisé en ce que** ledit condensateur de couplage (6) a une capacitance supérieure ou égale à 0,1 nF et inférieure ou égale à 5 nF, ledit dispositif de couplage étant adapté à se connecter à une phase d'une ligne électrique dont le voltage entre la phase et le neutre est supérieur ou égal à 5 kV.
